# DEMANDE DE BREVET EUROPEEN

(11) **EP 4 807 627 A1**
(43) Date de publication de la demande: **16.09.2026**
(21) Numéro de dépôt: 26164336.5
(22) Date de dépôt: 12.03.2026
(51) Int. Cl.: G06N 3/0495, G06N 3/082, G06N 3/045, G06N 3/09, G06N 3/0464

(54) **PROCÉDÉ ET DISPOSITIF DE COMPRESSION D'UN RÉSEAU DE NEURONES**

(30) Priorité: 14.03.2025 FR 2502569
(71) Demandeur: THALES, 92190 Meudon (FR)
(72) Inventeur: BAUVIN, Baptiste, Québec, G1P 4P5 (CA); AHMAD, Ola, Québec, G1P 4P5 (CA); BARET, Loïc, Québec, G1P 4P5 (CA); Tourais, David, 78990 Elancourt (FR)
(74) Mandataire: Lavoix

(57) **Abrégé**

La présente invention concerne un procédé de compression d'un réseau de neurones initial préalablement entraîné pour exécuter une tâche, et comporte des étapes de :
-classement (30) d'au moins une partie des neurones dudit réseau de neurones initial dans un des groupes suivants : un premier groupe de neurones à contribution négative pour l'exécution de ladite tâche, un deuxième groupe de neurones neutres pour l'exécution de ladite tâche et un troisième groupe de neurones critiques pour l'exécution de ladite tâche ;
- compression (34) dudit réseau de neurones initial, comportant des sous-étapes de:
sélection (35) de neurones parmi les neurones préalablement classés en fonction de leur groupe d'appartenance et
quantification (36) des poids associé(s) aux liaisons de sortie des neurones sélectionnés et/ou élagage des neurones sélectionnés,
ladite sélection (35) étant effectuée en considérant le premier groupe de neurones, puis le deuxième groupe de neurones, puis le troisième groupe de neurones.

## Description

La présente invention concerne un procédé de compression d'un réseau de neurones préalablement entraîné pour exécuter une tâche.

L'invention concerne également un dispositif de compression d'un réseau de neurones associé et un programme d'ordinateur associé.

L'invention se situe dans le domaine de l'intelligence artificielle, et plus spécifiquement de l'application des modèles d'intelligence artificielle dans des applications pratiques. En particulier, l'invention trouve des applications dans le domaine des applications de vision par ordinateur embarquées sur des plateformes mobiles ayant des ressources calculatoires et/ou énergétiques limitées.

Récemment, l'intelligence artificielle, et notamment l'utilisation des modèles entraînés par apprentissage machine pour effectuer une tâche, s'est largement développée.

On connaît notamment la mise en œuvre de modèles à base de réseaux de neurones pour effectuer des tâches de vision par ordinateur, par exemple des tâches de classification d'images numériques, de détection d'objets dans des images numériques ou de segmentation d'images numériques. Chaque image numérique est une donnée numérique, représentée en général par ou plusieurs matrices de pixels ayant des valeurs numériques associées. Pour de telles tâches de vision par ordinateur, un réseau de neurones est entraîné, sur une base de données numériques d'apprentissage, pour fournir, à partir de chaque donnée numérique d'entrée, un ou plusieurs résultats en sortie, le résultat étant par exemple un vecteur résultat à N dimensions, N étant supérieur ou égal à un. Le format du vecteur résultat dépend de la tâche à exécuter.

Un réseau de neurones comporte, de manière connue, une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

A chaque neurone est également associée une opération, c'est-à-dire un type de traitement, à effectuer par ledit neurone au sein de la couche de traitement correspondante.

Chaque couche est reliée aux autres couches par une pluralité de liaisons ou synapses. Un poids, également appelé poids synaptique, est associé à chaque synapse, et chaque synapse forme une liaison entre deux neurones. C'est souvent un nombre réel, qui prend des valeurs positives comme négatives. Dans certains cas, le poids synaptique est un nombre complexe ou une matrice de valeurs réelles ou complexes. Chaque neurone est propre à effectuer une somme pondérée des valeur(s) reçue(s) de la part des neurones de la couche précédente, chaque valeur étant alors multipliée par le poids respectif de chaque synapse, ou liaison, entre ledit neurone et les neurones de la couche précédente. En complément facultatif, chaque neurone est également apte à appliquer, en outre, un facteur additif, également appelé biais, pour ajuster les valeurs des neurones pondérée par les poids appliques. Chaque neurone est propre à appliquer ensuite une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside et la fonction de ReLU sont des exemples de fonction d'activation.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* »*,* et parfois désigné sous la dénomination « couche dense ».

Pour certaines tâches, des réseaux de neurones profonds peuvent intègrer plusieurs couches, incluant des couches entièrement connectées et des structures modulaires, qui sont utilisés pour obtenir une bonne performance, mais de tels réseaux de neurones sont extraordinairement complexes, et nécessitent l'utilisation de beaucoup de ressources calculatoires et de ressources mémoires, ce qui n'est pas compatible avec certaines applications. En particulier, un problème se pose dans le cas des applications embarquées sur des plateformes mobiles, lorsque le réseau de neurones est à exécuter par un dispositif ayant des ressources matérielles limitées ou lorsque la consommation d'énergie électrique pour effectuer les calculs est limitée.

Pour remédier à ce problème, des méthodes de compression des réseaux de neurones préalablement entraînés pour effectuer une tâche spécifique ont été proposées. La compression est effectuée soit par élagage (ou « pruning » en anglais), consistant à inhiber certaines liaisons entre neurones en associant de poids nuls à ces liaisons ou à supprimer physiquement, en d'autres termes effacer de la mémoire, les structures entières (les neurones et les poids qui les relient) ; soit par quantification des poids associés aux neurones du réseau de neurones. La quantification peut également être appliquée aux biais et aux activations afin d'accélérer le temps d'inférence.

L'invention a pour objet de proposer un procédé et dispositif de compression de réseau de neurones, mieux adapté pour des architectures de complexité quelconque, interprétable et adaptable en termes de compression.

A cet effet, l'invention a pour objet un procédé de compression d'un réseau de neurones préalablement entraîné pour exécuter une tâche, dit réseau de neurones initial, le réseau de neurones initial comportant une pluralité de couches successives, entre une première couche, configurée pour recevoir en entrée une donnée numérique d'entrée, et une dernière couche, la dernière couche étant configurée pour fournir un résultat relatif à l'exécution de la tâche, chaque couche comportant plusieurs neurones configurés pour effectuer une opération paramétrée associée, la sortie de chaque neurone d'une couche étant fournie en entrée d'au moins un neurone d'une couche suivante via une liaison de sortie ayant un poids associé. Ce procédé étant mis en œuvre par un processeur de calcul et comporte des étapes de :
- classement d'au moins une partie des neurones dudit réseau de neurones initial dans un des groupes suivants : un premier groupe de neurones à contribution négative pour l'exécution de ladite tâche, un deuxième groupe de neurones neutres pour l'exécution de ladite tâche et un troisième groupe de neurones critiques pour l'exécution de ladite tâche ;
- compression dudit réseau de neurones initial, comportant des sous-étapes de:
   sélection de neurones parmi les neurones préalablement classés en fonction de leur groupe d'appartenance et
   quantification des poids associé(s) aux liaisons de sortie des neurones sélectionnés et/ou élagage des neurones sélectionnés,
ladite sélection étant effectuée en considérant le premier groupe de neurones, puis le deuxième groupe de neurones, puis le troisième groupe de neurones.

Avantageusement, le procédé proposé est interprétable grâce à la catégorisation des neurones en groupes, et adaptable à un objectif de compression choisi.

Suivant d'autres aspects avantageux de l'invention, le procédé de compression comprend une ou plusieurs des caractéristiques suivantes, prises isolément ou suivant toutes les combinaisons techniquement possibles.

La compression est soit effectuée en une étape en fonction d'un objectif de compression, soit itérativement en fonction d'un objectif de réduction minimale de performance pour l'exécution de ladite tâche.

Le classement est effectué pour au moins une partie des couches du réseau de neurones initial en partant de la dernière couche, par itération, pour une couche traitée, d'étapes de calcul d'une valeur d'impact causal global de chaque neurone traité de ladite couche traitée pour des données numériques d'un ensemble d'apprentissage.

Pour un neurone traité, les poids associés à une liaison de sortie entre ledit neurone traité et un neurone du troisième groupe de la couche suivante forment en ensemble de poids influents dudit neurone traité, et le classement comporte un calcul d'une valeur d'impact causal représentative d'une différence, selon une métrique de causalité choisie, entre un résultat initial obtenu par application dudit réseau de neurones initial et un résultat modifié obtenu par un réseau de neurones modifié, sur une donnée d'apprentissage, le réseau de neurones modifié correspondant au réseau de neurones initial dans lequel les poids dudit ensemble de poids influents sont mis à zéro ou dans lequel ledit neurone traité est supprimé.

La valeur d'impact causal global d'un neurone traité est égale à une moyenne des valeurs d'impact causal calculées pour chaque donnée d'apprentissage.

Le procédé comporte en outre, pour chaque neurone traité, une application d'un test statistique, en fonction des valeurs d'impact causal calculées pour lesdites données numériques d'apprentissage.

Le procédé comporte, pour au moins les neurones dudit troisième groupe, une attribution d'un score associé à chaque neurone, le score étant représentatif d'une contribution dudit neurone à l'exécution de ladite tâche, ledit score étant pris en considération dans l'étape sélection.

L'attribution d'un score est effectuée pour les neurones de chacun desdits premier groupe, deuxième groupe et troisième groupe de neurones, et l'étape de sélection met en œuvre, pour chacun desdits groupes, une sélection de neurones dans un ordre croissant du score associé.

Dans l'étape d'attribution d'un score, le score attribué à un neurone est égal à une valeur absolue de la valeur d'impact causal global calculée pour ledit neurone.

Dans l'étape d'attribution d'un score, le score attribué à un neurone est, alternativement, égal à une moyenne quadratique des poids de l'ensemble de poids influents dudit neurone.

Le réseau de neurones exécute une tâche de classification parmi une pluralité de classes prédéterminées, les données numériques d'entrée étant des images numériques, et le résultat étant un vecteur résultat de classification, l'étape de classement comportant : un calcul, pour chaque neurone traité, d'une différence entre un vecteur résultat initial et un vecteur résultat modifié par classe et par image numérique d'apprentissage, la valeur d'impact causal étant calculée, pour lesdits neurones traités, en fonction desdites différences calculées pour chaque classe.

Le réseau de neurones exécute une tâche de détection d'objets dans des images numériques, fournissant en sortie une boîte englobante par objet détecté et une confiance de prédiction associée, et l'étape de classement met en œuvre une métrique de causalité pour comparer entre une boîte englobante initiale obtenue par le réseau de neurones initial et une boîte englobante modifiée obtenue par le réseau de neurones modifié.

Chaque boîte englobante étant définie par un centre ayant une position dans l'image numérique, et une surface, ladite métrique de causalité est une métrique choisie parmi : une première métrique de différence de confiance de prédiction de la position du centre, une deuxième métrique combinant la première métrique et une différence de surface entre la surface de la boîte englobante initiale et la surface de la boîte englobante modifiée, une troisième métrique de différence d'intersection des surfaces divisées par l'union des surfaces desdites boîte englobantes.

Le réseau de neurones initial est séparé en un premier sous-réseau et un deuxième sous-réseau, lesdites étapes de classement et de compression sont appliquées sur le premier sous-réseau avec un premier objectif de compression, le procédé comportant en outre une mise en œuvre d'un entrainement de masques non-causaux sur ledit deuxième sous-réseau, pour obtenir une compression des poids associés aux neurones de ladite deuxième partie avec un deuxième objectif de compression.

L'invention concerne également un dispositif de compression d'un réseau de neurones préalablement entraîné pour exécuter une tâche, dit réseau de neurones initial, le réseau de neurones initial comportant une pluralité de couches successives, entre une première couche, configurée pour recevoir en entrée une donnée numérique d'entrée, et une dernière couche, la dernière couche étant configurée pour fournir un résultat relatif à l'exécution de la tâche, chaque couche comportant plusieurs neurones configurés pour effectuer une opération paramétrée associée, la sortie de chaque neurone d'une couche étant fournie en entrée d'au moins un neurone d'une couche suivante via une liaison de sortie ayant un poids associé. Ce dispositif comportant un processeur de calcul configuré pour mettre en œuvre :
- un module de classement d'au moins une partie des neurones dudit réseau de neurones initial dans un des groupes suivants : un premier groupe de neurones à contribution négative pour l'exécution de ladite tâche, un deuxième groupe de neurones neutres pour l'exécution de ladite tâche et un troisième groupe de neurones critiques pour l'exécution de ladite tâche ;
- un module de compression dudit réseau de neurones initial, comportant des sous-modules de:
   sélection de neurones parmi les neurones préalablement classés en fonction de leur groupe d'appartenance et
   quantification des poids associé(s) aux liaisons de sortie des neurones sélectionnés et/ou élagage des neurones sélectionnés,
ladite sélection étant effectuée en considérant le premier groupe de neurones, puis le deuxième groupe de neurones, puis le troisième groupe de neurones.

Ce dispositif de compression est avantageusement configuré pour mettre en œuvre un procédé de compression d'un réseau de neurones préalablement entraîné pour exécuter une tâche tel que brièvement décrit ci-dessus.

L'invention concerne également un programme d'ordinateur comportant des instructions logicielles qui, lorsqu'elles sont exécutées par un ordinateur, mettent en œuvre un procédé de compression tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est un synoptique des blocs fonctionnels d'un dispositif de compression de réseau de neurones selon un mode de réalisation ;
[Fig. 2] la figure 2 est un logigramme des principales étapes d'un procédé de compression de réseau de neurones selon un mode de réalisation ;
[Fig. 3] la figure 3 est un logigramme d'une mise en œuvre du classement des neurones en trois groupes selon un mode de réalisation ;
[Fig. 4] la figure 4 est un exemple schématique de réseau de neurones à plusieurs étapes du classement.

L'invention s'applique pour tout réseau de neurones entraîné pour exécuter une tâche, et plus particulièrement pour des réseaux de neurones profonds ou DNN (de « Deep Neural Network »), entraînés pour exécuter des tâches de vision par ordinateur, par exemple classification d'images, détection d'objets dans des images, segmentation d'images.

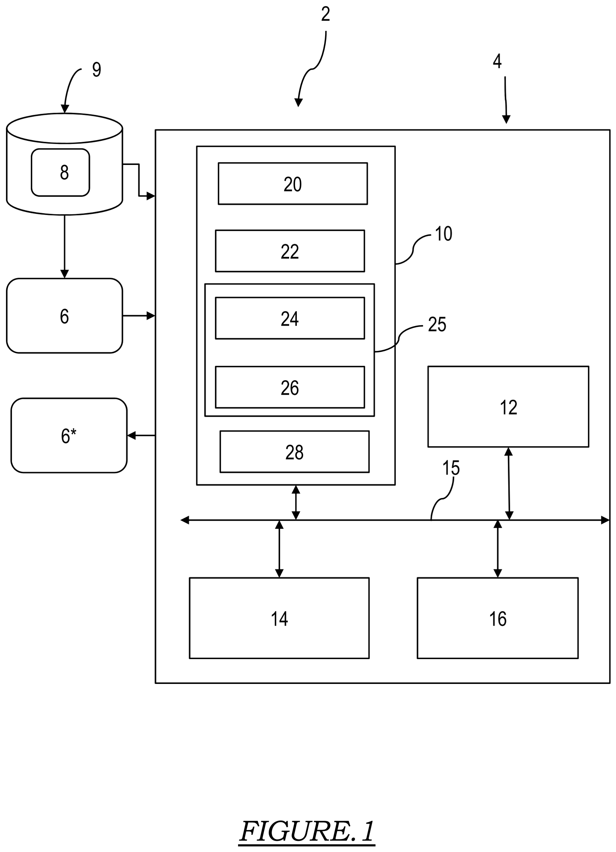

La figure 1 illustre schématiquement un système 2 comportant un dispositif de compression 4 d'un réseau de neurones 6 préalablement entraîné pour effectuer une tâche sur des données numériques d'entrée.

Le réseau de neurones 6 est de préférence un réseau de neurones profond ou DNN.

Les données numériques d'entrée sont par exemple des images numériques, et la tâche à effectuer est par exemple une tâche de vision par ordinateur. De manière connue, les images numériques d'entrée sont représentées sous forme de matrices de pixels, chaque pixel ayant une valeur ou un vecteur des valeurs numérique associée.

Par exemple, la tâche à effectuer est une tâche de classification d'images numériques en des classes prédéterminées, une détection d'objets de types prédéterminés dans des images numériques ou une segmentation d'images numériques.

L'exécution de la tâche consiste, à partir d'une donnée numérique fournie en entrée du réseau de neurones, par exemple d'une matrice de pixels, à calculer un résultat relatif à la tâche à effectuer. Le résultat est également représenté sous forme de donnée numérique de sortie, par exemple un vecteur résultat.

Par exemple, lorsque la tâche à effectuer est une classification en C classes prédéterminés, le vecteur résultat est un vecteur de taille C, chaque composante d'indice c du vecteur résultat étant représentative d'une probabilité d'appartenance à la classe d'indice c parmi les C classes.

Lorsque la tâche à effectuer est une détection d'objet(s), le résultat comporte une représentation numérique de boîtes englobantes (en anglais « bounding boxes ») et une valeur de confiance de détection associée, chaque boîte englobante étant définie par un centre ayant une position dans l'image d'entrée, et une surface. Chaque boîte englobante entoure un objet détecté.

Lorsque la tâche à effectuer est une segmentation, le résultat est une image de sortie, de la même taille que l'image numérique d'entrée, comportant un masque de segmentation de l'image numérique d'entrée.

Le réseau de neurones 6 est préalablement entraîné pour la tâche à effectuer sur des données numériques d'apprentissage 8 (ou ensemble d'apprentissage), mémorisées par exemple sous forme de base de données d'apprentissage 9. Pour chaque donnée numérique d'apprentissage, le résultat de la tâche à effectuer est connu.

Chaque donnée numérique d'apprentissage est alors dite étiquetée, elle est associée au résultat attendu, également appelé « vérité terrain ».

De manière connue, l'apprentissage préalable, dit apprentissage supervisé, consiste à modifier les paramètres du réseau de neurones, en particulier les poids associés aux liaisons, pour minimiser, pour chaque donnée d'apprentissage, une différence, selon une métrique choisie, entre le vecteur résultat obtenu par le réseau de neurones et le vecteur résultat attendu.

Le dispositif de compression 4 est dans un mode de réalisation un dispositif électronique programmable, comportant chacun un ou plusieurs processeurs 10, une unité de mémoire électronique 12, une interface de communication 14 et une interface homme-machine 16. Le dispositif de compression 4 est configuré pour mettre en œuvre un procédé de compression du réseau de neurones initial 6 pour obtenir un réseau de neurones compressé 6*.

Le processeur 10, l'unité de mémoire électronique 12, l'interface de communication 14 et l'interface homme-machine 16 communiquent via un bus de communication interne 15 du dispositif électronique programmable 4.

Dans la figure 1 un seul dispositif électronique programmable 4 est représenté, mais bien entendu, l'utilisation d'une pluralité de dispositifs de calcul, connectés entre eux, est également envisageable.

Le dispositif électronique programmable 4 comporte ou est connecté à la base de données d'apprentissage 9.

Le réseau de neurones initial 6, préalablement entraîné pour la tâche considérée, est fourni en entrée du dispositif électronique programmable 4, et par exemple mémorisé dans l'unité de mémoire électronique 12.

Le dispositif électronique programmable 4 comporte un module 20 de classement d'au moins une partie des neurones du réseau de neurones initial 6 dans un des trois groupes suivants: un premier groupe de neurones à contribution négative pour l'exécution de la tâche, un deuxième groupe de neurones neutres pour l'exécution de la tâche et un troisième groupe de neurones critiques pour l'exécution de la tâche.

Le classement, décrit plus en détail ci-après, est un classement du type fournissant des explications de manière causale.

Le dispositif électronique programmable 4 comporte, optionnellement, un module 22 d'attribution, pour au moins les neurones dudit troisième groupe, le score d'une contribution du neurone à l'exécution de ladite tâche. Optionnellement, le module d'attribution 22 est utilisé pour l'attribution de scores aux neurones du premier groupe et du deuxième groupe.

Le dispositif comporte également un module de compression 25 du réseau de neurones initial, comportant un module 24 de sélection de neurones parmi les neurones préalablement classés en fonction de leur groupe d'appartenance, et optionnellement en fonction de leur score, et un module 26 de quantification et/ou élagage des liaisons de sortie des neurones sélectionnés, effectué par mise à zéro des poids associés et/ou suppression physique des neurones sélectionnées et des poids associés, les modules 24 et 26 étant mis en œuvre successivement.

Dans un mode de réalisation, la compression est effectuée par rapport à un objectif de compression prédéterminé, la sélection étant effectuée en considérant le premier groupe de neurones, puis le deuxième groupe de neurones, puis le troisième groupe de neurones. Avantageusement, la compression est effectuée en une seule fois (en anglais « one-shot »).

L'objectif de compression est choisi parmi un taux de compression, une taille mémoire maximale, un temps d'inférence requis, ou un compromis entre taux de compression et performance du réseau de neurones pour la tâche à effectuer.

Dans un autre mode de réalisation, la compression est effectuée itérativement en fonction d'un objectif de réduction minimale de performance pour l'exécution de la tâche. Dans ce cas, lorsque la performance d'exécution de la tâche par le réseau de neurones modifié est inférieure à celle du réseau de neurones initial d'un seuil prédéfini, la compression est arrêtée.

Optionnellement, le dispositif électronique programmable 4 comporte en outre un module 28 de re-entrainement, soit avec masquage non-causal des neurones classés par le module 20 de classement, soit après élagage des neurones classés par le module 20 afin d'augmenter la performance du modèle modifié résultant de la compression.

Dans un mode de réalisation, les modules 20, 22, 24, 26, 28 sont réalisés sous forme d'instructions logicielles formant un programme d'ordinateur, qui, lorsqu'il est exécuté par un dispositif électronique programmable, met en œuvre un procédé de compression d'un réseau de neurones préalablement entraîné, tel que décrit plus en détail ci-après.

En variante non représentée, les modules 20, 22, 24, 26, 28 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

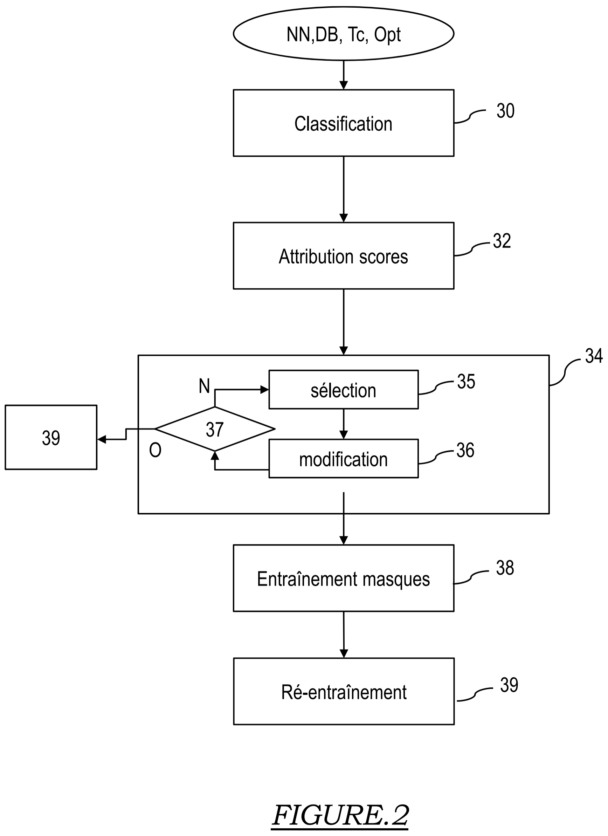

La figure 2 est un logigramme des principales étapes d'un procédé de compression de réseau de neurones mis en œuvre par un dispositif de compression 4.

En entrée sont fournis : le réseau de neurones NN préalablement entraîné (ou réseau de neurones initial), la base de données DB comportant les données numériques d'apprentissage, un objectif de compression Tc. Les données numériques d'apprentissage font partie des données numériques sur lesquelles le réseau de neurones initial NN a été préalablement entraîné.

L'objectif de compression est par exemple un taux de compression, fourni par un utilisateur (opérateur ou système utilisateur), tenant compte notamment d'une ou plusieurs parmi des contraintes de mémoire, de consommation électrique, de vitesses de la plateforme applicative.

Ainsi, pour une application embarquée, des contraintes de la plateforme destinée à embarquer l'application sont prises en considération. La plateforme est par exemple un véhicule, aérien, terrestre ou maritime.

Optionnellement, un choix de stratégie de compression Opt entre une première stratégie de compression totalement interprétable et une deuxième stratégie de compression hybride est également fourni en entrée.

Le réseau de neurones NN comporte un nombre Q de couches successives, entre une première couche d'indice 1, configurée pour recevoir en entrée une donnée numérique, par exemple sous forme de vecteur de données numériques d'entrée, et une dernière couche d'indice Q, la dernière couche étant configurée pour fournir un résultat relatif à l'exécution de la tâche, chaque couche comportant plusieurs neurones configurés pour effectuer une opération paramétrée associée. Le nombre de neurones par couche peut varier d'une couche à l'autre.

Le résultat est par exemple un vecteur à M dimensions, M étant supérieur ou égal à 1.

La sortie de chaque neurone n_{j,l} d'une couche indice *l* est fournie en entrée d'au moins un neurone n_{k,l+1} d'une couche suivante d'indice *l* + 1 via une liaison de sortie ayant un poids ${w}_{j , k}^{l \to l + 1}$ associé.

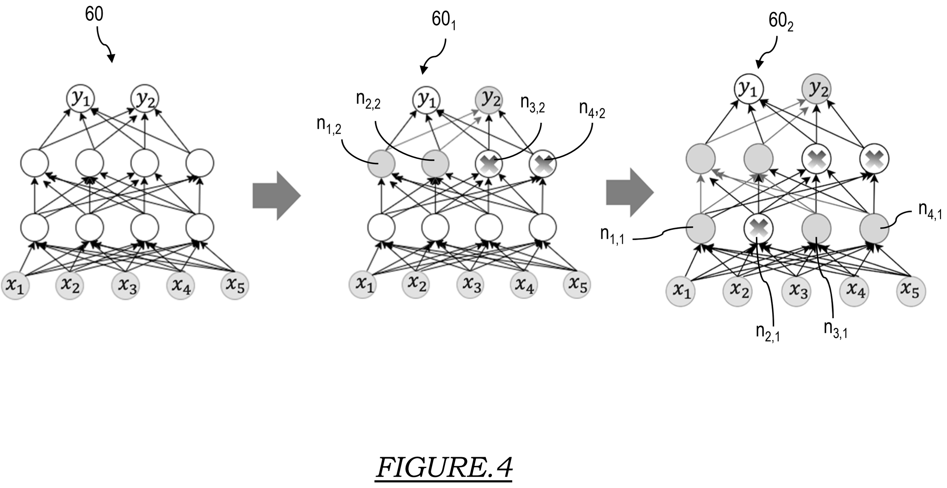

A titre d'exemple, un réseau de neurones 6 à deux couches, chaque couche comportant quatre neurones, est illustré dans la figure 4. Dans cet exemple schématique, chaque vecteur de données numériques d'entrée comporte cinq composantes notées x₁ à x₅, et le vecteur résultat comporte deux composantes, y₁ et y₂. Le réseau de neurones 6 de la figure 4 est totalement connecté, chaque neurone de la première couche étant connecté via une liaison de sortie à un neurone de la deuxième couche, chaque neurone de la deuxième couche étant connecté à chaque composant du vecteur résultat.

Bien entendu il s'agit d'un exemple schématique illustré à titre explicatif. En pratique, des images numériques de grande taille, par exemple des images numériques haute définition HD, de taille 4000x4000 pixels sont fournies en entrée d'un réseau de neurones de détection d'objets, et le réseau de neurones peut se diviser en deux modules : extracteur des caractéristiques (en anglais « backbone ») et une tête de prédiction.

L'extracteur de caractéristiques (« backbone ») peut comporter un nombre de sous-réseaux de neurones, nommés blocs ou architecture à plusieurs niveaux, avec ou sans embranchement parallèle. Chaque bloc peut comporter un nombre de couches de convolution. La tête de prédiction peut comporter deux ou trois sorties : une sortie qui prédit la classe des objets qui peut être sous une forme de carte thermique de confiance ou des valeurs réelles. Les autres sorties donnent des prédictions sur la taille et la position des boîtes englobantes. Un exemple de ce type de réseau de neurones de détection d'objet est « CenterNet », décrit dans l'article « CenterNet : Keypoint Triplets for Object Detection » de Kaiwen Duan et al, IEEE International Conference on Computer Vision, 2019.

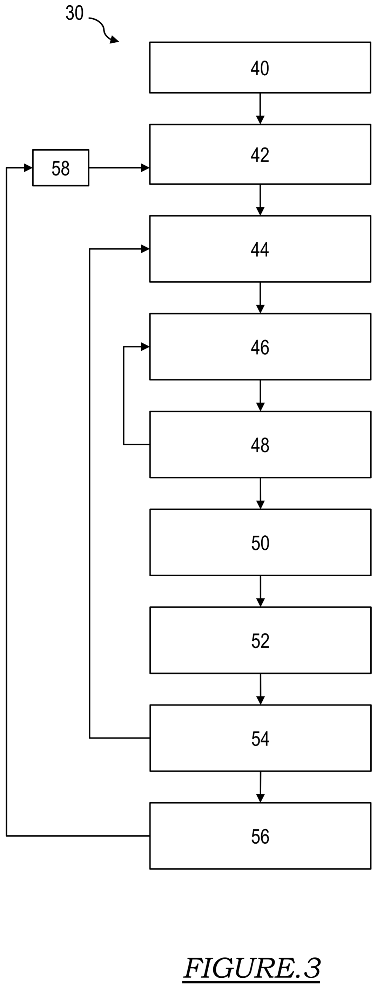

Le procédé de compression comporte une étape 30 de classement d'au moins une partie de neurones du réseau de neurones en trois groupes distincts, mise en œuvre par le module de classement 20. Le classement 30 est effectué par application d'un traitement causal, en partant de la dernière couche (la couche de sortie ou de prédiction, en anglais « outputs ») du réseau de neurones. Un mode de réalisation du classement 30 est décrit ci-après en référence à la figure 3.

L'étape 30 est suivie d'une étape 32 d'attribution d'un score associé à chaque neurone du troisième groupe, optionnellement à chaque neurone de chaque groupe, mise en œuvre par le module 22 d'attribution.

Le procédé comporte également une étape 34 de compression, comportant des sous-étapes de sélection 35 de neurones en fonction du groupe d'appartenance et de modification 36 par quantification et/ou élagage. L'élagage comporte une mise à zéro et/ou une suppression physique (i.e. effacement de la mémoire électronique) du ou des neurones et des poids associé(s) aux liaisons de sortie associées à ces neurones. L'étape 36 est réalisé soit en une seule fois en fonction de l'objectif de compression, soit itérée en fonction des ratios de compression jusqu'à la performance (la prédiction) du modèle commence à se dégrader.

L'étape de compression par l'option de quantification comporte une conversion des valeurs flottants (souvent encodés en 32 bits) a des valeurs moins précises, tel que 16, 8, 4, ou 2 bits, en éliminant des bits.

La sélection 35 est d'abord appliquée pour le premier groupe G1, puis pour le deuxième groupe G2, puis pour le troisième groupe G3.

La sélection 35 peut être effectuée : en sélectionnant tous les neurones d'un groupe, ou en sélectionnant une partie des neurones d'un groupe aléatoirement ou en sélectionnant successivement les neurones d'un groupe selon un ordre prédéterminé, de préférence défini par les scores préalablement calculés.

Par exemple, la sélection de tous les neurones d'un groupe peut être appliquée au premier groupe G1 et au deuxième groupe G2, respectivement aux neurones ayant une contribution négative ou neutre au résultat. Pour le troisième groupe G3 des neurones critiques, seule une partie des neurones est sélectionnée, de préférence selon l'ordre défini par les scores préalablement calculés, si l'étape 36 de compression nécessite une sélection des neurones du troisième groupe G3 pour atteindre un objectif de compression, par exemple un ratio de compression prédéfini.

Ensuite, une modification 36 est appliquée aux neurones sélectionnés.

Par exemple, la modification est une mise à zéro de tous les poids sortants des neurones sélectionnés ou une suppression physique des neurones sélectionnés.

Selon une variante, la modification est une quantification, en appliquant un facteur de quantification choisi, sur les poids associés aux liaisons de sortie du neurone considéré, et parfois, les valeurs du neurone considéré.

Par exemple, si dans le réseau de neurones initial, chaque poids est représenté sur 32 bits, l'opération de quantification consiste à réduire le nombre de bits de représentation du poids à 16 bits ou à 8 bits.

Selon une autre variante, les opérations de mise à zéro et de quantification sont combinées, par exemple les poids associés aux liaisons de sortie des neurones du premier groupe et du deuxième groupe sont mis à zéro et les poids associés aux liaisons de sortie des neurones du troisième groupe G3 sont quantifiés.

Selon une autre variante, d'autres combinaisons sont envisageables.

Dans un exemple de mise en œuvre, il est vérifié si l'objectif de compression est atteint à l'étape de vérification 37, et en cas de résultat négatif (réponse « non » à l'étape 37) l'étape 35 de sélection est à nouveau mise en œuvre. Lorsque tous les neurones d'un groupe ont été considérés, le groupe suivant est considéré.

Si l'objectif de compression a été atteint (réponse « oui » à l'étape 37), le procédé prend fin (étape 39). Le réseau de neurones compressé obtenu est mémorisé.

Avantageusement, le procédé proposé permet d'effectuer une compression en fonction de la contribution des neurones à l'exécution de la tâche, et donc de réaliser un compromis entre compression et performance du réseau de neurones en garantissant de réserver les neurones les plus critiques sur la décision du modèle.

Le procédé comporte en outre, optionnellement, une étape 38 d'entrainement de masques de compression non-causaux. Cette étape est appliquée lorsque la stratégie de compression choisie est hybride, combinant la compression causale effectuée par les étapes 30 à 36 et un entraînement des masques non-causaux.

Dans cette stratégie hybride, les étapes 30 à 36 sont appliquées sur une première partie des neurones du réseau de neurones 6 avec un premier objectif de compression, par exemple sur les P dernières couches, P étant un entier choisi compris entre 1 et Q-1. Les autres neurones du réseau de neurones 6 forment une deuxième partie de neurones.

L'étape 38 d'entraînement des masques est appliquée en masquant les neurones de la deuxième partie, avec pour objectif d'obtenir une compression, selon un deuxième objectif de compression, des poids et des neurones de la deuxième partie, tout en minimisant une fonction de coût qui comprend deux objectifs:
- un premier objectif de la fonction de coût est de minimiser la perte de prédiction du modèle masqué par rapport aux prédictions du model initial.
- un deuxième objectif de la fonction de coût est de renforcer l'éparpillement du modèle masqué pour éviter une solution triviale dont toutes les valeurs des masques sont égales à 1.

Cette étape 38 comporte l'apprentissage d'un masque par couche du réseau du neurone. Les masques résultants sont des matrices des valeurs réelles entre 0 et 1, ou binaires suite à une fonction de seuillage, par exemple la fonction « sigmoide », qui identifie l'importance de chaque neurone de la deuxième partie.

Optionnellement, le procédé comprend également, après l'étape optionnelle 38, ou en sortie de l'étape 34 de compression si l'étape optionnelle 38 n'est pas mise en œuvre, une étape 39 de ré-entraînement du modèle formé par le réseau de neurones modifié pour renforcer la performance.

La figure 3 illustre un mode de réalisation de l'étape 30 de classement d'au moins une partie des neurones en trois groupes dans un mode de réalisation.

Le classement met en œuvre des calculs de valeurs d'impact causal (ou importance) de chaque neurone traité de la couche traitée pour chaque donnée numérique de chaque ensemble d'apprentissage. La valeur d'impact causal est représentative d'une différence, selon une métrique de causalité choisie, entre un résultat initial obtenu par application du réseau de neurones initial et un résultat modifié obtenu par un réseau de neurones modifié, le réseau de neurones modifié correspondant au réseau de neurones initial après élagage.

Le réseau de neurones modifié correspond au réseau de neurones initial dans lequel le neurone traité et tous les poids entrants et sortants ainsi tout neurone exclusivement connecté avec le neurone traité sont enlevés physiquement ou mis à zéro.

Dans ce mode de réalisation les données numériques d'entrée du réseau de neurones sont des images numériques, la tâche à réaliser est d'associer une classe c parmi C classes à chaque image numérique d'entrée, C étant un nombre entier prédéterminé. La sortie du réseau de neurones est un vecteur résultat de taille C, chaque composante du vecteur étant représentative d'une prédiction de la classe correspondante par le réseau de neurones.

Le vecteur résultat est par exemple le vecteur de « logits » obtenu en sortie de la dernière couche du réseau de neurones avant la couche de décision probabiliste appelée couche « softmax », par exemple.

L'étape de classification 30 comporte une étape 40 d'obtention de K données numériques d'apprentissage pour chaque classe, K étant un nombre entier prédéterminé, par exemple K=100.

Les K données numériques d'apprentissage par classe sont extraites de la base de données numériques d'apprentissage, soit de manière aléatoire, ou en choisissant les données les plus représentatives de chaque classe selon le niveau de confiance du modèle initial par exemple. Si, pour certaines classes, le nombre de données numériques d'apprentissage est inférieur à K dans la base de données, une augmentation calculatoire des données numériques d'apprentissage est mise en œuvre.

L'étape de classification 30 comporte en outre une itération d'étapes de détermination de la contribution de chaque neurone d'une couche au résultat final, et de classification dans l'un des premier, deuxième ou troisième groupe, en partant de la dernière couche. Un traitement est appliqué aux poids des liaisons à chaque itération, en fonction de la contribution déterminée de chaque neurone.

L'itération est appliquée soit sur toutes les couches, de la couche d'indice Q jusqu'à la couche d'indice 1, soit sur un sous ensemble de P couches, de la couche d'indice Q à la couche d'indice Q-P, P étant un entier inférieur à Q-1.

Le premier groupe G1 est un groupe de neurones de contribution négative, ou de bruit, pour l'exécution de la tâche ; le deuxième groupe G2 est un groupe de neurones neutres pour l'exécution de la tâche, et le troisième groupe G3 est un groupe de neurones critiques (ou de contribution positive) pour l'exécution de la tâche.

L'étape de classement comporte une mise à jour 42 d'un indice de couche *l* , qui est la couche traitée, *l* étant mis à l'indice de l'avant dernière couche à l'initialisation, une mise à jour 44 d'un indice j de neurone traité dans la couche d'indice *l* et une mise à jour 46 d'un indice c de classe parmi les C classes.

Ensuite, l'étape de classement comporte un calcul 48 d'une valeur d'effet du traitement causal du neurone j de la couche *l* , également appelé neurone traité ci-après, pour chaque donnée numérique d'apprentissage Xc de la classe d'indice c.

La valeur d'effet est calculée par une métrique de distance entre le vecteur résultat du réseau de neurones initial NN et le vecteur résultat par un réseau de neurones NN* modifié. Dans le réseau de neurones NN* modifié, les poids de sortie influents du neurone traité, associés à des liaisons vers des neurones critiques de la couche suivante, sont mis à zéro.

Pour une donnée numérique d'apprentissage Xc, la formule suivante est appliquée : $TE {\left({w}_{j}^{l \to l + 1}, {X}_{c}\right)}_{K} = {\hat{Y}}_{{w}_{j}^{l \to l + 1} = 0} {\left({X}_{c}\right)}_{K} - \hat{Y} {\left({X}_{c}\right)}_{K}$

Où $TE {\left({w}_{j}^{l \to l + 1}, {X}_{c}\right)}_{K}$ est un vecteur d'effet sur Xc (de taille K), la métrique étant la différence entre ${\hat{Y}}_{{w}_{j}^{l \to l + 1} = 0} \left({X}_{c}\right)$, le vecteur résultat du réseau de neurones modifié, lorsque les poids associés à chaque liaison de sortie du neurone j vers tous les neurones du troisième groupe G3 (ou neurones critiques) de la couche *l*+1 sont mis à zéro, et *Ŷ*(*X_{c}*) le vecteur résultat du réseau de neurones initial NN.

L'ensemble de poids $\left\{{w}_{j}^{l \to l + 1}\right\}$ forme un ensemble de poids influents associés au nœud traité. En d'autres termes, le réseau de neurones modifié est obtenu par mise à zéro des poids de l'ensemble de poids influents.

La formule [MATH 1] est appliquée pour chaque donnée numérique d'apprentissage Xc de la classe c.

L'étape 48 est répétée pour chaque classe c parmi les C classes, pour le neurone traité, les vecteurs d'effet calculés étant mémorisés.

Le procédé comporte en outre une étape 50 de calcul d'un vecteur d'effet global à K composantes (ou éléments), pour le neurone traité par calcul d'une moyenne sur toutes les classes par : $GTE {\left({w}_{j}^{l \to l + 1}\right)}_{K} = \frac{1}{C} {\sum }_{c = 1}^{C} TE {\left({w}_{j}^{l \to l + 1}, {X}_{c}\right)}_{K} = \frac{1}{C} {\sum }_{c = 1}^{C} {\hat{Y}}_{{w}_{j}^{l \to l + 1} = 0} {\left({X}_{c}\right)}_{K} - \hat{Y} {\left({X}_{c}\right)}_{K}$

Où la notation (.)_{K} indique un vecteur de K éléments.

Les composantes du vecteur d'effet global sont appelées valeurs d'impact causal du neurone traité sur les C classes. Pour un neurone traité j, chaque composante, 1 ≤ *k* ≤ *K,* du vecteur GTE est une valeur moyenne sur les C classes calculée par tirage aléatoire d'un exemple de chaque sous-ensemble de données d'apprentissage représentant une classe c.

Une valeur d'impact causal global $gte \left({w}_{j}^{l \to l + 1}\right)$ du neurone traité est ensuite calculée par somme ou moyenne des K composantes de chaque vecteur d'effet global pour le neurone traité : $gte \left({w}_{j}^{l \to l + 1}\right) = \frac{1}{K} {\sum }_{k = 1}^{K} GTE \left({w}_{j}^{l \to l + 1}, k\right)$

La valeur d'impact causal global $gte \left({w}_{j}^{l \to l + 1}\right)$ peut être positive ou négative.

A l'issue de l'étape 50 sont obtenues K valeurs d'impact causal et la valeur d'impact causal global du neurone traité, ces K valeurs d'impact causal étant utilisées ensuite dans l'étape 52 de test statistique pour déterminer si le neurone traité est causal ou non-causal (i.e. neutre). Le signe de la valeur d'impact causal global est utilisé pour classer le neurone traité dans un des trois groupes G1, G2 ou G3, tel que décrit plus en détail ci-après.

Le test statistique appliqué est un test d'hypothèse, dans lequel l'hypothèse H₀ est l'hypothèse que le neurone traité n'a pas de contribution dans l'obtention du résultat par le réseau de neurones NN (ou absence de causalité). L'hypothèse complémentaire H₁ est une hypothèse de causalité.

Pour effectuer le test statistique, une valeur de risque de première espèce α est fixée, par exemple α=5%. Le risque de première espèce α est la probabilité que l'on accepte de décider H1 (i.e. le neurone traité a une contribution) si la vérité est H₀ (i.e. le neurone traité n'a pas de contribution).

La probabilité critique, notée p-value, est calculée à partir des K valeurs d'impact causal préalablement calculées (K composantes du vecteur d'effet global calculé).

La probabilité critique est comparée à la valeur de risque de première espèce α.

Le procédé comporte alors une détermination 54 d'un groupe pour le neurone traité :
- Si *p-value > α* : le neurone traité n'a pas de contribution, il appartient au deuxième groupe G2, de neurones neutres ;
- Si *p-value* ≤ *α* et la valeur d'impact causal global $gte \left({w}_{j}^{l \to l + 1}\right)$ est négative, le neurone appartient au troisième groupe G3 de neurones critiques ;
- Si *p-value* ≤ *α* et la valeur d'impact causal global $gte \left({w}_{j}^{l \to l + 1}\right)$ est positive, le neurone appartient au premier groupe G1 de neurones non-utiles ou bruyants (i.e. introduisant un bruit dans le résultat de prédiction).

En effet, une valeur d'impact causal global $gte \left({w}_{j}^{l \to l + 1}\right)$ négative, au vu des équations [MATH 3] et [MATH 2], indique que lorsque le réseau de neurones modifié NN* est mis en œuvre, le résultat est moins performant vis-à-vis de la tâche à effectuer que lorsque le réseau de neurones initial NN est appliqué. En d'autres termes, le neurone traité a une contribution critique, la modification des poids sortants détériore le résultat.

A contrario, une valeur d'impact causal global $gte \left({w}_{j}^{l \to l + 1}\right)$ positive, au vu des équations [MATH 3] et [MATH 2], indique que lorsque le réseau de neurones modifié NN* est mis en oeuvre, le résultat est plus performant vis-à-vis de la tâche à effectuer que lorsque le réseau de neurones initial NN est appliqué. En d'autres termes, le neurone traité a une contribution négative et la modification des poids sortants de ce neurone traité améliore le résultat.

Les étapes 44 à 54 sont itérées pour chaque neurone de la couche d'indice *l*.

Lorsque tous les neurones de la couche d'indice *l* ont été traités, l'indice de couche étant décrémenté lors d'une étape de mise à jour d'indice 56, jusqu'à ce que (58) les P couches soient traitées.

La figure 4 illustre schématiquement les neurones identifiés comme critiques à chaque itération à partir du réseau de neurones 60 à deux couches, le réseau de neurones 60₁ étant obtenu après l'application des étapes 42 à 54 sur la deuxième (avant dernière) couche du réseau de neurones 60, et le réseau de neurones 60₂ étant obtenu après l'itération des étapes 42 à 54 sur la première couche du réseau de neurones 60₁.

Comme cela est illustré dans cet exemple schématique, les neurones n_{1,2} et n_{2,2} de la deuxième couche sont classifiés dans le troisième groupe G3, et les neurones n_{3,2} et n_{4,2} sont soit dans le premier groupe G1, soit dans le deuxième groupe G2, ce qui est représenté par une croix dans la figure 4. Dans la première couche, et comme illustré sur la figure 4 par le réseau de neurones 60₂, les neurones n_{1,1}, n_{3,1} et n_{4,1} sont classifiés dans le troisième groupe G3, et le neurone n_{2,1} est soit dans le premier groupe G1, soit dans le deuxième groupe G2.

Plusieurs modes de réalisation sont envisagés pour l'étape d'attribution des scores 32 du procédé de compression décrit en référence à la figue 2.

Selon un mode de réalisation, l'attribution des scores est effectuée pour au moins les neurones classés dans le troisième groupe G3.

Selon un autre mode de réalisation, l'attribution des scores est effectuée pour tous les neurones classés respectivement dans le premier, deuxième et troisième groupe.

Selon une première variante, le score attribué à chaque neurone traité est égal à la valeur absolue ou magnitude de la valeur d'impact causal global préalablement calculée à l'étape 50, au vu de l'équation [MATH 3].

Selon une deuxième variante, le score attribué à chaque neurone traité est égal à la norme euclidienne des poids influents déterminés précédemment.

Le procédé de compression a été décrit ci-dessus plus particulièrement pour un réseau de neurones entraîné préalablement pour une tâche de classification d'images numériques en C classes.

Le procédé de compression s'applique également lorsque la tâche du réseau de neurones est une tâche de détection d'objets ou une tâche de segmentation.

Lorsque la tâche à effectuer est une détection d'objets, les caractéristiques définissant les boîtes englobantes sont utilisées dans l'étape de classement des groupes de neurones.

Par exemple, chaque boîte englobante est de forme rectangulaire, et est caractérisée par la position (x_{c},y_{c}) de son centre dans l'image numérique, ainsi que par les dimensions de largeur W et de hauteur H du rectangle, la surface de la boîte englobante étant définie par WxH. De plus, le réseau de neurones initial fournit une confiance de prédiction associée à la prédiction de la position du centre de chaque boîte englobante.

Les métriques de causalité suivantes sont considérées pour le calcul d'une valeur d'effet dans l'étape 48, appliquée pour le classement des neurones en trois groupes.

Selon une première métrique, une différence de confiance de prédiction de la position du centre est prise en considération : ${TE}_{conf} {\left({w}_{j}^{l \to l + 1}\right)}_{K} = {\sum }_{i = 1}^{m} \left({x}_{i}+{y}_{i}\right) {\left({{c}^{˜}}_{i}-{c}_{i}\right)}_{K}$

Où ${{c}^{˜}}_{i} = {c}_{{i}_{{w}_{j}^{l \to l + 1} = 0}}$ est la valeur de confiance obtenue par le réseau de neurones modifié, dans lequel les poids sortants du neurone j de la couche *l* vers des neurones critiques (groupe G3) de la couche *l* + 1 sont modifiés, par exemple mis à zéro ; i est l'indice de la boîte englobante de l'objet d'indice i parmi m boîtes englobantes détectées ; K est l'indice de l'image numérique d'apprentissage.

La deuxième métrique combine la première métrique et une différence de surface entre la surface de la boîte englobante initiale et la surface de la boîte englobante modifiée : ${TE}_{cs} {\left({w}_{j}^{l \to l + 1}\right)}_{K} = \left[{TE}_{conf}{\left({w}_{j}^{l \to l + 1}\right)}_{K}; {TE}_{s}{\left({w}_{j}^{l \to l + 1}\right)}_{K}\right]$ Et ${TE}_{s} {\left({w}_{j}^{l \to l + 1}\right)}_{K} = {\sum }_{i = 1}^{m} {\left({{W}^{˜}}_{i} {{H}^{˜}}_{i}-{W}_{i}{H}_{i}\right)}_{K}$

Où *H̃ᵢ* et *W̃ᵢ* sont les dimensions de la boîte englobante i obtenues par le réseau de neurones modifié, dans lequel les poids sortants du neurone j de la couche *l* vers des neurones critiques (groupe G3) de la couche *l* + 1 sont modifiés, par exemple mis à zéro.

La troisième métrique envisagée évalue le rapport entre l'intersection des surfaces, (entre les boîtes englobantes issues du réseau de neurone et celle de la vérité terrain), et leur union, également appelée IoU pour « Intersection over Union ») : ${TE}_{IoU} {\left({w}_{j}^{l \to l + 1}\right)}_{K} = {\sum }_{i = 1}^{m} {\left({{IoU}^{˜}}_{i}-{IoU}_{i}\right)}_{K}$

Le test statistique 52 est appliqué de manière analogue.

Lorsque la tâche à effectuer est une segmentation d'images, le résultat du réseau de neurones est une image segmentée, de même taille que l'image numérique d'entrée, dans laquelle chaque pixel est associé à une valeur de masque de segmentation. L'image segmentée forme un vecteur résultat à deux dimensions. Dans un mode de réalisation, ce vecteur résultat à deux dimensions est utilisé de manière analogie au vecteur résultat de classification, pour le classement en groupes.

Toute caractéristique décrite ci-dessus pour un mode de réalisation ou une variante, peut être mise en œuvre également dans les autres modes de réalisation et variantes décrits ci-dessus, pour autant que techniquement possible.

## Revendications

1. Procédé de compression d'un réseau de neurones préalablement entraîné pour exécuter une tâche, dit réseau de neurones initial, le réseau de neurones initial comportant une pluralité de couches successives, entre une première couche, configurée pour recevoir en entrée une donnée numérique d'entrée, et une dernière couche, la dernière couche étant configurée pour fournir un résultat relatif à l'exécution de la tâche, chaque couche comportant plusieurs neurones configurés pour effectuer une opération paramétrée associée, la sortie de chaque neurone d'une couche étant fournie en entrée d'au moins un neurone d'une couche suivante via une liaison de sortie ayant un poids associé, le procédé étant mis en œuvre par un processeur de calcul et étant **caractérisé en ce qu'**il comporte des étapes de :
- classement (30) d'au moins une partie des neurones dudit réseau de neurones initial dans un des groupes suivants : un premier groupe de neurones à contribution négative pour l'exécution de ladite tâche, un deuxième groupe de neurones neutres pour l'exécution de ladite tâche et un troisième groupe de neurones critiques pour l'exécution de ladite tâche ;
- compression (34) dudit réseau de neurones initial, comportant des sous-étapes de:
sélection (35) de neurones parmi les neurones préalablement classés en fonction de leur groupe d'appartenance et
quantification (36) des poids associé(s) aux liaisons de sortie des neurones sélectionnés et/ou élagage des neurones sélectionnés,
ladite sélection (35) étant effectuée en considérant le premier groupe de neurones, puis le deuxième groupe de neurones, puis le troisième groupe de neurones.

2. Procédé selon la revendication 1, dans lequel ladite compression est soit effectuée en une étape en fonction d'un objectif de compression, soit itérativement en fonction d'un objectif de réduction minimale de performance pour l'exécution de ladite tâche.

3. Procédé selon la revendication 1 ou 2, dans lequel ledit classement (30) est effectué pour au moins une partie des couches du réseau de neurones initial en partant de la dernière couche, par itération, pour une couche traitée, d'étapes de calcul d'une valeur d'impact causal global de chaque neurone traité de ladite couche traitée pour des données numériques d'un ensemble d'apprentissage.

4. Procédé selon la revendication 3, dans lequel, pour ledit neurone traité, les poids associés à une liaison de sortie entre ledit neurone traité et un neurone du troisième groupe de la couche suivante forment en ensemble de poids influents dudit neurone traité, et dans lequel le classement (30) comporte un calcul d'une valeur d'impact causal représentative d'une différence, selon une métrique de causalité choisie, entre un résultat initial obtenu par application dudit réseau de neurones initial et un résultat modifié obtenu par un réseau de neurones modifié, sur une donnée d'apprentissage, le réseau de neurones modifié correspondant au réseau de neurones initial dans lequel les poids dudit ensemble de poids influents sont mis à zéro ou dans lequel ledit neurone traité est supprimé.

5. Procédé selon la revendication 4, dans lequel la valeur d'impact causal global d'un neurone traité est égale à une moyenne des valeurs d'impact causal calculées pour chaque donnée d'apprentissage.

6. Procédé selon l'une des revendications 3 à 5, comportant en outre, pour chaque neurone traité, une application (52) d'un test statistique, en fonction des valeurs d'impact causal calculées pour lesdites données numériques d'apprentissage.

7. Procédé selon l'une quelconque des revendications 3 à 5, comportant, pour au moins les neurones dudit troisième groupe, une attribution (32) d'un score associé à chaque neurone, le score étant représentatif d'une contribution dudit neurone à l'exécution de ladite tâche, ledit score étant pris en considération dans l'étape sélection (35).

8. Procédé selon la revendication 7, dans lequel ladite attribution (32) d'un score est effectuée pour les neurones de chacun desdits premier groupe, deuxième groupe et troisième groupe de neurones, et dans lequel l'étape de sélection (35) met en œuvre, pour chacun desdits groupes, une sélection de neurones dans un ordre croissant du score associé.

9. Procédé selon la revendication 7 ou 8, dans lequel dans l'étape d'attribution (32) d'un score, le score attribué à un neurone est égal à une valeur absolue de la valeur d'impact causal global calculée pour ledit neurone.

10. Procédé selon la revendication 7 ou 8, dans lequel dans l'étape d'attribution (32) d'un score, le score attribué à un neurone est égal à une moyenne quadratique des poids de l'ensemble de poids influents dudit neurone.

11. Procédé selon l'une quelconque des revendications 3 à 10, dans lequel le réseau de neurones exécute une tâche de classification parmi une pluralité de classes prédéterminées, les données numériques d'entrée étant des images numériques, et le résultat étant un vecteur résultat de classification, l'étape de classement (30) comportant :
un calcul, pour chaque neurone traité, d'une différence entre un vecteur résultat initial et un vecteur résultat modifié par classe et par image numérique d'apprentissage, la valeur d'impact causal étant calculée, pour lesdits neurones traités, en fonction desdites différences calculées pour chaque classe.

12. Procédé selon l'une quelconque des revendications 1 à 11, dans lequel le réseau de neurones exécute une tâche de détection d'objets dans des images numériques, fournissant en sortie une boîte englobante par objet détecté et une confiance de prédiction associée, dans lequel l'étape de classement (30) met en œuvre une métrique de causalité pour comparer une boîte englobante initiale obtenue par le réseau de neurones initial et une boîte englobante modifiée obtenue par le réseau de neurones modifié.

13. Procédé selon la revendication 12, chaque boîte englobante étant définie par un centre ayant une position dans l'image numérique, et une surface, dans lequel ladite métrique de causalité est une métrique choisie parmi : une première métrique de différence de confiance de prédiction de la position du centre, une deuxième métrique combinant la première métrique et une différence de surface entre la surface de la boîte englobante initiale et la surface de la boîte englobante modifiée, une troisième métrique de différence d'intersection des surfaces divisées par l'union des surfaces desdites boîte englobantes.

14. Procédé selon l'une quelconque des revendications 1 à 13, dans lequel le réseau de neurones initial est séparé en un premier sous-réseau et un deuxième sous-réseau, lesdites étapes de classement (30) et de compression (34) sont appliquées sur le premier sous-réseau avec un premier objectif de compression, le procédé comportant en outre une mise en œuvre d'un entrainement de masques non-causaux sur ledit deuxième sous-réseau, pour obtenir une compression des poids associés aux neurones de ladite deuxième partie avec un deuxième objectif de compression.

15. Programme d'ordinateur comportant des instructions de code qui, lorsqu'elles sont exécutées par un dispositif électronique programmable, mettent en œuvre un procédé de compression d'un réseau de neurones conforme aux revendications 1 à 14.

16. Dispositif de compression d'un réseau de neurones préalablement entraîné pour exécuter une tâche, dit réseau de neurones initial (6), le réseau de neurones initial comportant une pluralité de couches successives, entre une première couche, configurée pour recevoir en entrée une donnée numérique d'entrée, et une dernière couche, la dernière couche étant configurée pour fournir un résultat relatif à l'exécution de la tâche, chaque couche comportant plusieurs neurones configurés pour effectuer une opération paramétrée associée, la sortie de chaque neurone d'une couche étant fournie en entrée d'au moins un neurone d'une couche suivante via une liaison de sortie ayant un poids associé, le dispositif comportant un processeur de calcul et étant **caractérisé en ce que** le processeur de calcul (10) est configuré pour mettre en oeuvre :
- un module de classement (20) d'au moins une partie des neurones dudit réseau de neurones initial dans un des groupes suivants : un premier groupe de neurones à contribution négative pour l'exécution de ladite tâche, un deuxième groupe de neurones neutres pour l'exécution de ladite tâche et un troisième groupe de neurones critiques pour l'exécution de ladite tâche ;
- un module de compression (25) dudit réseau de neurones initial, comportant des sous-modules de:
sélection (24) de neurones parmi les neurones préalablement classés en fonction de leur groupe d'appartenance et
quantification (26) des poids associé(s) aux liaisons de sortie des neurones sélectionnés et/ou élagage des neurones sélectionnés,
ladite sélection étant effectuée en considérant le premier groupe de neurones, puis le deuxième groupe de neurones, puis le troisième groupe de neurones.
